# EUROPEAN PATENT APPLICATION

(11) **EP 4 236 213 A1**
(43) Date of publication of application: **30.08.2023**
(21) Application number: 23158188.5
(22) Date of filing: 23.02.2023
(51) Int. Cl.: H04L 12/403

(54) **CONVERTER DEVICE AND MEASUREMENT SYSTEM**

(30) Priority: 25.02.2022 FI 20225176
(71) Applicant: Iotflow Oy, 00560 Helsinki (FI)
(72) Inventor: Hokkanen, Janne, 00560 Helsinki (FI)
(74) Representative: Primrose Oy

(57) **Abstract**

The invention relates to a measurement system and a converter device (50). The converter device (50) comprises two or more M-Bus master communication interfaces (45, 46, 47) for connecting two or more M-Bus slave devices (10, 20, 30) to the converter device (50) and for inputting M-Bus protocol slave data from the two or more M-Bus slave devices (10, 20, 30), a conversion module (60) configured to convert M-Bus protocol slave data from the two or more M-Bus master communication interfaces (45, 46, 47) into output protocol slave data, and an output slave communication interface (70, 73, 76) for connecting an output master device (80, 84, 86) to the converter device (50) and for outputting the output protocol slave data from the converter device (50).

## Description

### FIELD OF THE INVENTION

The present invention relates to a converter device and more particularly to a converter device according to preamble of claim 1. The present invention further relates to a measurement system and more particularly to a measurement system according to preamble of claim 10.

### BACKGROUND OF THE INVENTION

In the prior art M-Bus communication protocol is used commonly in remote reading of various meters such as water, gas or electricity meters or control devices or sensors. These meters are M-Bus slave devices in a hierarchical measurement system. The prior art M-Bus systems comprise a main M-Bus line comprising two wires, M-Bus+ wire and M-Bus- wire. The M-Bus slave devices are connected to the main M-Bus line parallel to each other.

The M-Bus slave devices are connected to and controlled with direct control devices or master devices. The direct control devices comprise usually programmable logic controllers (PLCs) or remote terminal units (RTUs). The direct control devices utilize usually a Modbus communication protocol or some other similar higher level communication protocol. Therefore, a converter device is arranged between the M-Bus slave devices and the direct control device. The converter device is configured to convert M-Bus measurement data from the M-Bus slave devices into Modbus protocol measurement data or other output protocol communication data. The direct control device is further configured to read the converted Modbus measurement data or the output protocol communication data from the converter device.

The system operates in client/server -principle such that the converter device is configured to call or send queries the M-Bus slave devices and receive B-Bus protocol measurement data from the M-Bus slave devices as response to the call or query. The converter device comprises a Modbus register or an output protocol register and the converter device is configured to store the measurement data received from the M-Bus slave devices as converted Modbus protocol measurement data or converted output protocol measurement data. The direct control device is then configured to read the Modbus protocol measurement data or the output protocol measurement data from the Modbus register or the output protocol register.

Installing and setting up the prior art system is time consuming and complicated. Each M-Bus slave device needs an individual address such that the converter device enabled to call or send queries to the specific M-Bus slave device connected to the main M-Bus line. These individual addresses of the M-Bus slave devices need to be pre-programmed to the converter device such that the converter device is able to call and received measurement data individually from the M-Bus slave devices. If new M-Bus slave device is added to the main M-Bus line or changes to the existing M-Bus slave devices are made, programming of the converter device needs to be carried out again. This makes installing inefficient and time consuming as well as prevents quick and easy changes to the M-Bus slave devices.

### BRIEF DESCRIPTION OF THE INVENTION

An object of the present invention is to provide a converter device and a measurement system such that the prior art disadvantages are solved or at least alleviated.

The objects of the invention are achieved by a converter device which is characterized by what is stated in the independent claim 1. The objects of the invention are further achieved by a measurement system which is characterized by what is stated in the independent claim 10.

The preferred embodiments of the invention are disclosed in the dependent claims.

The invention is based on the idea of providing a converter device configured to convert M-bus communication protocol data to an output communication protocol data. The converter device comprises:
- two or more M-Bus master communication interfaces for connecting two or more M-Bus slave devices to the converter device and for inputting or receiving M-Bus protocol slave data from the two or more M-Bus slave devices,
- a conversion module configured to convert M-Bus protocol slave data from the two or more M-Bus master communication interfaces into output protocol slave data,
- each of the two or more M-Bus master communication interfaces is separately connected to the conversion module, and
- an output slave communication interface for connecting an output master device to the converter device and for outputting the output protocol slave data from the converter device.

Providing two or more M-Bus master communication interfaces to the converter device enables connecting two or more M-Bus slave devices separately to the converter device. Therefore, the connected M-Bus slave devices may be called by the converter module based on the two or more M-Bus master communication interfaces. Thus, the M-Bus salve devices identified based on the two or more M-Bus master communication interfaces, respectively, and there is no need to program addresses of the M-Bus slave devices to the converter device.

In some embodiments, the conversion module is arranged between the two or more M-Bus master communication interfaces and the output slave communication interface.

Connecting each of the two or more M-Bus master communication interfaces separately to the conversion module provides physically separate connection of the two or more M-Bus master interfaces to the conversion module.

In some embodiments, each of the two or more M-Bus master communication interfaces is provided with an associated unique M-Bus master interfaces identifier. The unique M-Bus master interface identifiers enable the conversion module to identify and call a specific M-Bus slave device. Further, the unique M-Bus master interface identifiers enable the link the received measurement data to a specific M-bus slave device.

In some embodiments, the converter device comprises one output slave communication interface connected to the conversion module. Accordingly, an output master device is arranged to be connected to the converter device via the output slave communication interface.

The output slave communication interface is connected to the conversion module.

In some other embodiments, the converter device comprises a first output slave communication interface and a second output slave communication interface, the first output slave communication interface and the second output slave communication interface being connected to the conversion module. Accordingly, a first output master device and a second output master device are arranged to be connected to the converter device via the output slave communication interface. Thus, data may be read from the converter device with two different output protocols and/or with two different output master devices.

The first output slave communication interface and the second output slave communication interface are separately connected to the conversion module.

In some embodiments, the output slave communication interface is provided with an associated output slave interface identifier.

In some other embodiments, the first output slave communication interface is provided with an associated first output slave interface identifier, and the second output slave communication interface is provided with an associated second output slave interface identifier.

The output slave interface identifiers enable higher level computers to identify as well as send and receive messages or data to and from the output master device.

In some embodiments, the output communication protocol is Modbus communication protocol, the output slave communication interface is a Modbus slave communication interface, and the conversion module configured to convert M-Bus protocol slave data from the two or more M-Bus master communication interfaces into Modbus protocol slave data.

Accordingly, the Modbus slave communication interface enables connecting a Modbus master device to the converter device.

It should be noted that the output communication protocol may also be some other output communication protocol than the M-Bus and the Modbus communication protocol.

In some embodiments, the output communication protocol is a serial Modbus RTU communication protocol, the output slave communication interface is a serial Modbus RTU slave communication interface, and the conversion module is configured to convert M-Bus protocol slave data from the two or more M-Bus master communication interfaces into serial Modbus RTU protocol slave data.

In some other embodiments, the output communication protocol is a Modbus TCP communication protocol, the output slave communication interface is a Modbus TCP slave communication interface, and the conversion module is configured to convert M-Bus protocol slave data from the two or more M-Bus master communication interfaces into Modbus TCP protocol slave data.

In some further embodiments, the output communication protocol is Modbus ASCII communication protocol, the output slave communication interface is a Modbus ASCII slave communication interface, and the conversion module configured to convert M-Bus protocol slave data from the two or more M-Bus master communication interfaces into Modbus ASCII protocol slave data to the Modbus ASCII slave communication interface.

In some further embodiments, the output communication protocol is Modbus Plus communication protocol, the output slave communication interface is a Modbus Plus slave communication interface, and the conversion module configured to convert M-Bus protocol slave data from the two or more M-Bus master communication interfaces into Modbus Plus protocol slave data to the Modbus Plus slave communication interface.

The Modbus communication protocol may be any known or future Modbus communication protocol.

In some embodiments, the first output slave communication interface is a serial Modbus RTU slave communication interface, the conversion module is configured to convert M-Bus protocol slave data from the two or more M-Bus master communication interfaces into serial Modbus RTU protocol slave data for the first output slave communication interface. Further, the second output slave communication interface is a Modbus TCP slave communication interface, the conversion module is configured to convert M-Bus protocol slave data from the two or more M-Bus master communication interfaces into Modbus TCP protocol slave data for the second output slave communication interface.

Accordingly, the data from the M-Bus slave devices may be with two most efficient communication protocols from the same converter device.

In some other embodiments, the first output slave communication interface is a serial Modbus RTU slave communication interface, the conversion module is configured to convert M-Bus protocol slave data from the two or more M-Bus master communication interfaces into serial Modbus RTU protocol slave data for the first output slave communication interface. Further, the second output slave communication interface is a Modbus ASCII slave communication interface, the conversion module is configured to convert M-Bus protocol slave data from the two or more M-Bus master communication interfaces into Modbus ASCII protocol slave data for the second output slave communication interface.

In some further embodiments, the first output slave communication interface is a Modbus ASCII slave communication interface, the conversion module is configured to convert M-Bus protocol slave data from the two or more M-Bus master communication interfaces into Modbus ASCII protocol slave data for the first output slave communication interface. Further, the second output slave communication interface is a Modbus TCP slave communication interface, the conversion module is configured to convert M-Bus protocol slave data from the two or more M-Bus master communication interfaces into Modbus TCP protocol slave data for the second output slave communication interface.

In some further embodiments, the first output slave communication interface is a Modbus Plus slave communication interface, the conversion module is configured to convert M-Bus protocol slave data from the two or more M-Bus master communication interfaces into Modbus Plus protocol slave data for the first output slave communication interface. Further, the second output slave communication interface is a Modbus TCP, Modbus ASCII or Modbus RTU slave communication interface, the conversion module is configured to convert M-Bus protocol slave data from the two or more M-Bus master communication interfaces into Modbus TCP, Modbus ASCII or Modbus RTU protocol slave data for the second output slave communication interface.

In some embodiments, the conversion module is configured to comprise two or more output registers and each of the two or more M-Bus master communication interfaces is linked to one of the two or more output registers, respectively.

The M-Bus slave data received from the Mb-Bus slave devices is converted to the output communication protocol slave data and stored to the two or more output registers.

In some other embodiments, the output communication protocol is Modbus communication protocol, and the output slave communication interface is the Modbus slave communication interface, and the conversion module is configured to comprise two or more Modbus registers and each of the two or more M-Bus master communication interfaces is linked to one of the two or more Modbus registers, respectively.

Preferably the conversion module comprises a separate output register or Modbus register for each of the two or more M-Bus master communication interfaces. Thus, the output communication protocol slave data of each of the M-Bus slave communication interfaces is stored to a separate output register. Alternatively, there is common output register to which the output communication protocol slave data from all of the two or more M-Bus master communication interfaces is stored. In the latter case, the output communication protocol slave data is stored with or is associated with the unique M-Bus master communication interface identifier corresponding the M-Bus master communication interface via which it is received.

In some further embodiments in which the converter device comprises the first output slave communication interface and the second output slave communication interface. In this embodiment, the conversion module comprises a two or more first output registers and two or more second output registers. The conversion module is configured to convert the convert M-Bus protocol slave data from the two or more M-Bus master communication interfaces into the first output communication protocol slave data and store to the two or more first output registers. Similarly, conversion module is configured to convert the convert M-Bus protocol slave data from the two or more M-Bus master communication interfaces into the second output communication protocol slave data and store to the two or more second output registers.

In some embodiments the conversion module comprises a separate first output register or Modbus register for each of the two or more M-Bus master communication interfaces. Thus, the output communication protocol slave data of each of the M-Bus slave communication interfaces is stored to a separate first output register. Alternatively, there is common first output register to which the output communication protocol slave data from all of the two or more M-Bus master communication interfaces is stored. In the latter case, the output communication protocol slave data is stored with or is associated with the unique M-Bus master communication interface identifier corresponding the M-Bus master communication interface via which it is received.

Similarly, in some embodiment the conversion module comprises a separate second output register or Modbus register for each of the two or more M-Bus master communication interfaces. Thus, the output communication protocol slave data of each of the M-Bus slave communication interfaces is stored to a separate second output register. Alternatively, there is common second output register to which the output communication protocol slave data from all of the two or more M-Bus master communication interfaces is stored. In the latter case, the output communication protocol slave data is stored with or is associated with the unique M-Bus master communication interface identifier corresponding the M-Bus master communication interface via which it is received.

The above mentioned output register designs enable the output communication protocol slave data of each of the two or more M-Bus master communication interfaces, and of the two or more M-Bus slave devices, to be identified and read by the output master device or the first and second output master devices.

In some embodiments, the converter device is provided with a converter address.

The converter address identifies the converter device and enables the output master device to call and read data from the converter device.

In some other embodiments, the output communication protocol is Modbus communication protocol, the output slave communication interface is a Modbus slave communication interface, and the converter device is provided with a slave Modbus address.

The present invention is further based on the idea of providing a measurement system comprising a converter device configured to convert M-bus communication protocol data to an output communication protocol data, two or more M-Bus slave devices connected to the converter device. The two or more M-Bus slave devices are configured to generate measurement data and transmit the generated measurement data as M-Bus protocol measurement data. The converter device comprises a conversion module configured to convert M-Bus protocol measurement data to the output communication protocol data.

The converter device comprises two or more M-Bus master communication interfaces for receiving the M-Bus protocol measurement data. Each of the two or more M-Bus slave devices is connected to a separate M-Bus master communication interface of the converter device.

Further, each of the two or more M-Bus master communication interfaces is separately connected to the conversion module.

Accordingly, each of the two or more M-Bus slave devices is separately connected to the converter device. Therefore, each of the two or more M-Bus slave devices is separately connected to one of the two or more M-Bus master communication interfaces. Programming of the converter device is avoided and each of the M-Bus slave devices is identified based on the M-Bus master communication interface to which it is connected. Thus, the M-Bus master communication interfaces are utilized to identify the two or more M-Bus slave devices connected t the converter device.

In the following the M-Bus protocol measurement data corresponds the M-Bus protocol slave data mentioned above in connection with the converter device. Further, in the following the output protocol measurement data corresponds the output protocol slave data mentioned above in connection with the converter device.

In some embodiments and in the context of the present invention, the two or more M-Bus slave devices comprise one or more of the following: a meter device, a sensor device or an actuator device.

In some embodiments, the meter device or sensor device may be a gas meter, flow meter, temperature meter, electricity meter, humidity meter or the like meter.

In some embodiments of the present invention, the two or more M-Bus slave devices are arranged to or in connection with a building and/or in connection with one or more rooms/spaces of a building.

In some embodiments, the converter device is arranged to or in connection the building, together with the M-Bus slave devise.

In some further embodiments, an output master device is arranged to or in connection with the building together with the converter device and the M-Bus slave devices.

In some embodiments, the converter device comprises an output slave communication interface, and the converter device comprises a conversion module configured to convert the M-Bus protocol measurement data from the two or more M-Bus master communication interfaces into output protocol measurement data.

An output master device may be connected to the converter device and the output master device read data from the converter device.

In some other embodiments, the converter device comprises an output slave communication interface, the output slave communication interface being a Modbus slave communication interface, and the converter device comprises a conversion module configured to convert M-Bus protocol measurement data from the two or more M-Bus master communication interfaces into Modbus protocol measurement data.

A Modbus master device may be connected to the converter device and the Modbus master device read data from the converter device.

In some embodiments, the measurement system comprises an output master device connected to the output slave communication interface.

In some further embodiments, the measurement system comprises an output master device connected to the Modbus slave communication interface, the output master device being a Modbus master device.

In some embodiments, the conversion module is configured to comprise two or more output registers and each of the two or more M-Bus master communication interfaces is linked to one of the two or more output registers, respectively. The conversion module is configured to store the M-Bus protocol measurement data of the two or more M-Bus slave devices to the two or more output registers as the output communication protocol measurement data, and the output master device is configured to read the stored output communication protocol measurement data from the two or more output registers.

In some other embodiments, the conversion module is configured to comprise two or more Modbus registers and each of the two or more M-Bus master communication interfaces is linked to one of the two or more Modbus registers, respectively. The conversion module is configured to store M-Bus protocol measurement data of the two or more M-Bus slave devices to the two or more Modbus registers as Modbus protocol measurement data, and the Modbus master device is configured to read the stored Modbus protocol measurement data from the two or more Modbus registers.

The two or more output registers or the two or more Modbus registers are configured as disclosed above in connection with the converter device.

In some embodiments, the converter device comprises a first output slave communication interface and a second output slave communication interface. The measurement system comprises a first output master device connected to the first output slave communication interface and a second output master device connected to the second output slave communication interface.

In some embodiments, the first output slave communication interface is a serial Modbus RTU slave communication interface and the first output master device is a serial Modbus RTU master device, and the second output slave communication interface is a Modbus TCP slave communication interface and the second output master device is a Modbus TCP master device.

In some other embodiments, the first output slave communication interface is a serial Modbus RTU slave communication interface and the first output master device is a serial Modbus RTU master device, and the second output slave communication interface is a Modbus ASCII slave communication interface and the second output master device is a Modbus ASCII master device.

In some further embodiments, the first output slave communication interface is a serial Modbus ASCII slave communication interface and the first output master device is a serial Modbus ASCII master device, and the second output slave communication interface is a Modbus TCP slave communication interface and the second output master device is a Modbus TCP master device.

In some other embodiments, the first output slave communication interface is a serial Modbus Plus slave communication interface and the first output master device is a serial Modbus Plus master device, and the second output slave communication interface is a Modbus ASCII, Modbus TCP or Modbus RTU slave communication interface and the second output master device is a Modbus ASCII, Modbus TCP or Modbus RTU slave master device.

In embodiments where there are the first and second output slave communication interface, the output registers or the Modbus registers may be configured or designed as disclosed above in connection with the converter device.

The converter device in the measurement system is preferably a converter device according to above disclosed.

In the context of the present application M-Bus or Meter-Bus means a generally known communication protocol according to European standards EN 13757-2 and EN 13757-3.

In the context of the present invention Modbus means a generally known communication protocol originally published by Modicon (now Schneider Electric) in 1979.

The different Modbus variants are also generally known communication protocol variants. Modbus RTU (Remote Terminal Unit) is used in serial communication. Modbus ASCII is used in serial communication and makes use of ASCII characters for protocol communication. Modbus TCP or Modbus TCP/IP is a Modbus variant used for communications over TCP/IP networks or ethernet. Modbus Plus is a peer-to-peer protocol specifying a software layer as well as a hardware layer.

In the context of the present invention the M-Bus slave devices connected to the converter device with the M-Bus master communication interfaces may be called with a broadcast call or a broadcast query may be sent to the M-Bus slave devices via the M-Bus master communication interfaces. The broadcast call or a broadcast query means an address code which is configured to and used to send information to all M-Bus slave devices in the system or M-Bus network. Furthermore, the broadcast call or the broadcast query is configured such that all the M-Bus slave devices respond to the broadcast call or the broadcast query.

M-Bus communication protocol supports addressing in accordance with EN 13757 standard. The broadcast address for the broadcast call or the broadcast query is for example Primary Adress code 255.

In the context of the present invention, the M-Bus master communication interface means a physical electrical interface to which a M-Bus slave device may be connected with M-Bus connection line or wire(s).

In the context of the present invention, the Modbus slave communication interface or the output communication protocol interface means a physical electrical interface to which a Modbus master device or an output master device may be connected with Modbus or output communication protocol connection line or wire(s).

It should be noted, that the above mentioned embodiments may be combined in any technically feasible manner.

Further, operation of the converter in relation to the actual M-Bus protocol conversion to the output protocol is generally known for a skilled person in the art. Thus, description of the conversion details is omitted.

An advantage of the invention is that as each of the M-Bus slave devices is separately connected to the converter device with a separate M-Bus master communication interface, the M-Bus slave devices may be identified based on the M-Bus master communication interfaces or identifiers associated to them. Thus, the broadcast call or the broadcast query may be used to call the M-Bus devices and still identity the M-Bus slave devices and the data received from the M-Bus slave devices. Therefore, programming of the converter device or the conversion module thereof is not needed. Installation and modification of the measurement system is efficient and simple.

### BRIEF DESCRIPTION OF THE DRAWINGS

The invention is described in detail by means of specific embodiments with reference to the enclosed drawings, in which
Figure 1 shows schematically a prior art measurement system;
Figure 2 shows schematically a prior art converter device;
Figure 3 shows schematically one embodiment of a measurement system according to the present invention;
Figure 4 shows schematically one embodiment of a converter device according to the present invention;
Figure 5 shows schematically another embodiment of a measurement system according to the present invention;
Figure 6 shows schematically a further embodiment of a measurement system according to the present invention; and
Figure 7 shows schematically a further embodiment of a converter device according to the present invention.

### DETAILED DESCRIPTION OF THE INVENTION

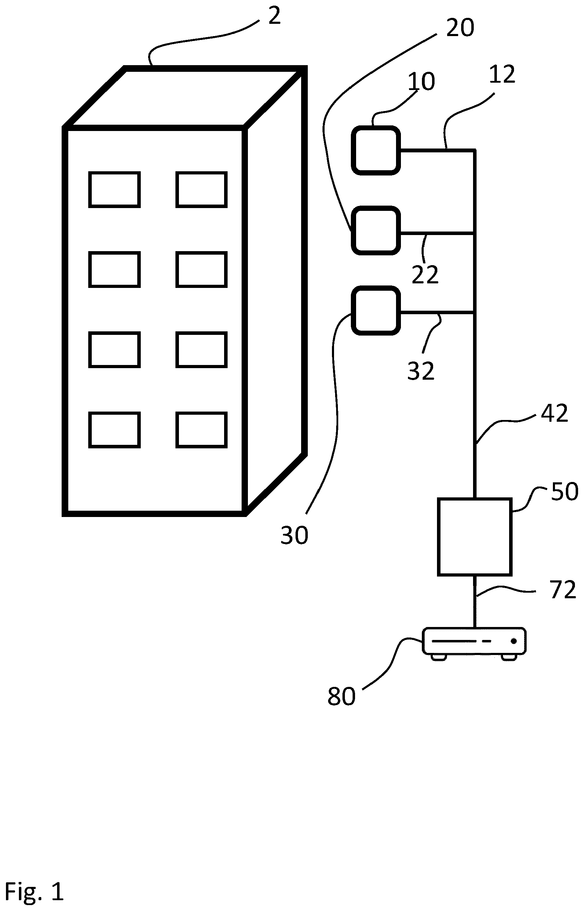

Figure 1 shows schematically a prior art measurement system. The measurement system comprises M-Bus slave devices 10, 20, 30 installed or arranged to a building 2 or in connection with a building. The M-Bus slave devices are different kinds of meters, sensors or actuators and are configured to communicate by utilizing the M-Bus communication protocol.

The measurement system further comprises a converter device 50 configured to convert M-Bus communication protocol data to an output communication protocol data. The measurement system also comprises an output master device 80 configured to control and/or connect the M-Bus slave devices to a computer or supervisory computer controlling the measurement system. The output master device 80 is configured communicate by utilizing an output communication protocol such as Modbus communication protocol.

As shown in figure 1, the prior art measurement system comprises a main M-Bus line 42 connected to the converter device 50. The M-Bus slave devices 10, 20, 30 are connected to the main M-Bus line 42 parallel to each other with M-Bus connection lines 12, 22, 32, respectively. Accordingly, the M-Bus slave devices 10, 20, 30 are connected to the converter device 42 with the common main M-Bus line 42.

The converter device 50 is further connected to the output master device 80 with an output protocol connection line 72.

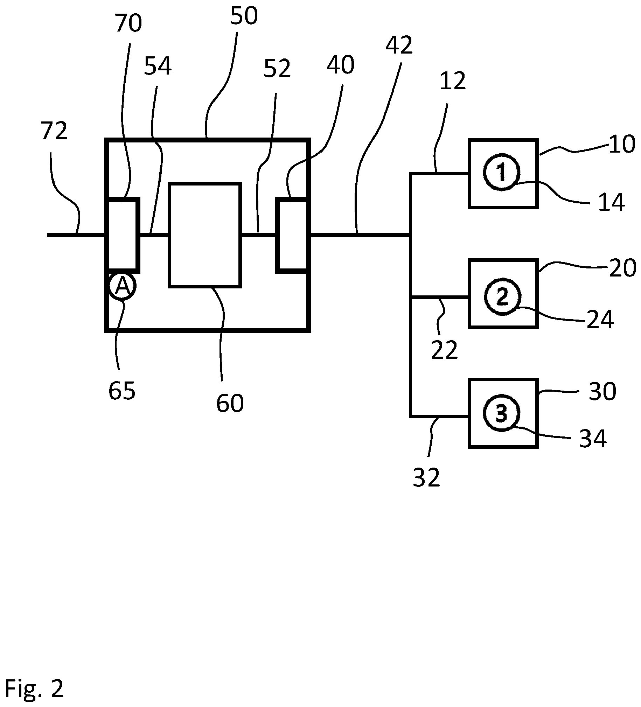

Figure 2 shows schematically the prior art converter device 50 and the M-Bus slave devices 10, 20, 30 in a configuration as shown in figure 1. The converter device comprises an M-Bus master communication interface 40 to which the common M-Bus line 42 is connected. The M-Bus slave devices 10, 20, 30 are connected to common M-Bus line 42 in parallel with the M-Bus connection lines 12, 22, 32.

The converter device 50 further comprises an output slave communication interface 70 to which the output protocol connection line 72 is connected.

The converter device 50 further comprises a conversion module configured to convert M-Bus protocol slave data received from the M-Bus slave devices 10, 20, 30 via the M-Bus master communication interface 40 to an output protocol slave data to be communicated via the output slave communication interface 70 to the output master device 80.

The conversion module 60 comprises a processor, a memory and conversion instructions stored to the memory. The conversion instructions comprise instructions to carry out the conversion of the M-Bus protocol slave data into output protocol slave data. In some embodiments, the conversion module 60 also comprises a separate storage unit or a separate memory unit.

The conversion module 60 is arranged between the M-Bus master communication interface 40 and the output slave communication interface 70.

The M-Bus master communication interface 40 is connected to the conversion module 60 with M-Bus conversion line 52. The output slave communication interface 70 is connected to the conversion module 60 with an output conversion line 54.

As shown in figure 2, in the prior art measurement system each of the M-Bus slave devices 10, 20, 30 is provided with a unique M-Bus slave address 14, 24, 34. These addresses need to be programmed to the converter device 50 and to the conversion module 60 thereof such that the M-Bus slave devices 10, 20, 30 may be identified. The unique M-Bus slave address 14, 24, 34 of the M-Bus slave devices 10, 20, 30 are utilized to call a specific M-Bus slave device 10, 20, 30. The converter device 50 is also provided with a converter device address 65 identifying the converter device 50 and enabling the output master device 80 to call the specific converter device 50.

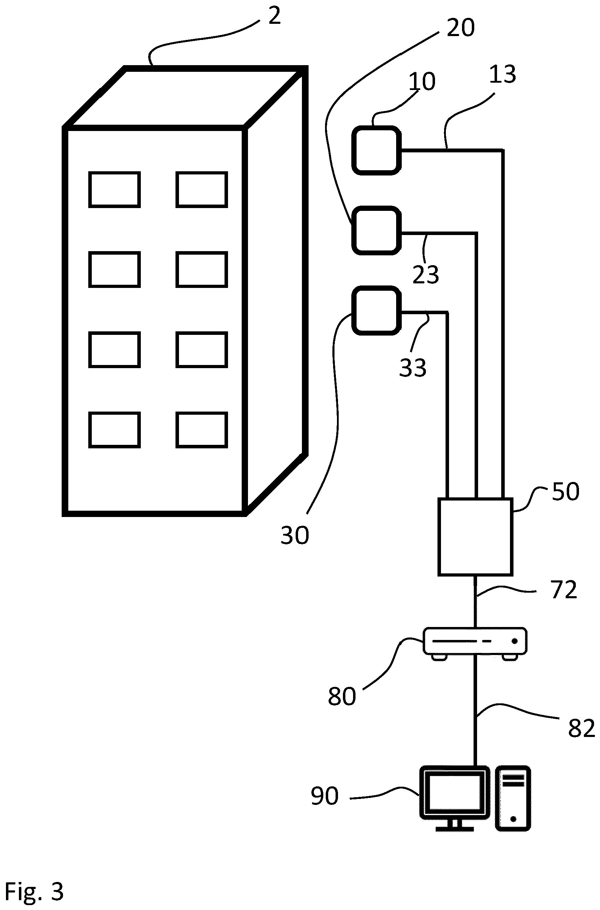

Figures 3 to 7 show different embodiments of a measurement system and converter device according to the present invention. In the embodiments o the figures 3 to 7, the output communication protocol is defined as Modbus communication protocol and the output slave communication interface of the converter device 50 is defined as Modbus protocol slave interface. Furthermore, the output master device 80 is defined as Modbus master device.

However, it should be noted that in some other embodiments, the output protocol may also be some other protocol than Modbus or M-Bus communication protocol. Thus, also the output slave communication interface of the converter device 50 may be other than Modbus or M-bus communication interface. Further, the output master device 80 is also other than Modbus master device.

Figure 3 shows a measurement system according to one embodiment of the present invention. The measurement system comprises M-Bus slave devices 10, 20, 30 installed or arranged to a building 2 or in connection with a building. The M-Bus slave devices are different kinds of meters, sensors or actuators and are configured to communicate by utilizing the M-Bus communication protocol.

The measurement system further comprises the converter device 50 configured to convert M-Bus communication protocol data to Modbus communication protocol data.

Each of the M-Bus slave devices 10, 20, 30 is connected to the converter device 50 separately. Each of the M-Bus slave devices 10, 20, 30 is connected to the converter device 50 with a separate M-Bus slave connection line 13, 23, 33 to the converter device 50, as shown in figure 3.

It should be noted that the measurement system may comprise two or more M-Bus slave devices 10, 20, 30 which are all separately connected to the converter device 50.

The converter device 50 is further connected to a Modbus master device 80 with a Modbus protocol connection line 72.

The Modbus master device 80 is further connected to a supervisory computer 90 with a computer communication connection 82. The supervisory computer 90 may be any computing device such as personal computer or server with at least one processor.

The supervisory computer 90 comprises a human-machine interface or user interface via which user may operate to supervisory computer 90 and send messages or requests to the Modbus master device 80. The supervisory computer 90 may also comprise an application software running in the supervisory computer 90 for operating the user interface and communicating with the Modbus master device 80 and also the M-Bus slave devices 10, 20, 30.

In the embodiment of figure 3, the computer communication connection 82 is provided a computer communication connection 82 line.

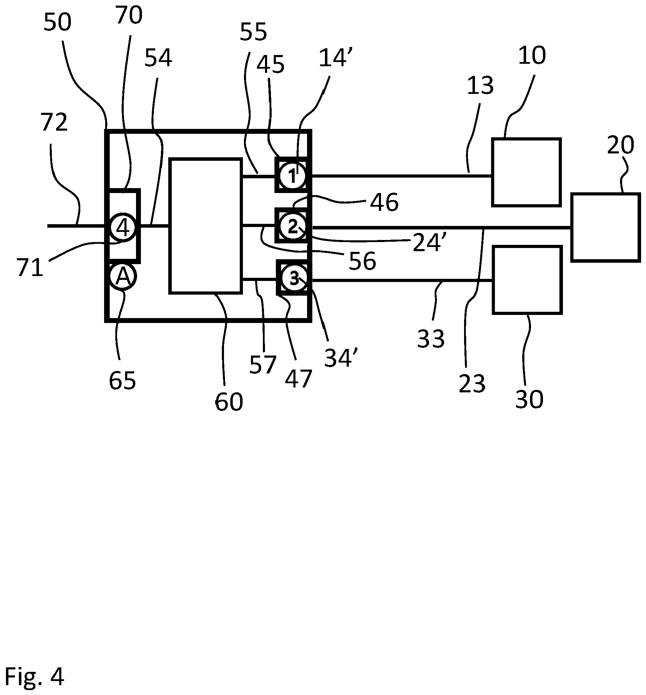

Figure 4 shows schematically a converter device 50 and the M-Bus slave devices 10, 20, 30 in a configuration as shown in figure 3 and according to the present invention. The converter device 50 comprises several, two or more, M-Bus master communication interfaces 45, 46, 47. One M-bus slave device 10, 20, 30 is connected to one M-Bus master communication interface 45, 46, 47.

Each of the M-bus slave devices 10, 20, 30 is connected to a separate M-Bus master communication interface 45, 46, 47, respectively. Each of the M-Bus slave devices 10, 20, 30 is connected to a separate M-Bus master communication interface 45, 46, 47 of the converter device 50, respectively, with a with a separate M-Bus slave connection line 13, 23, 33.

The converter device 50 further comprises a Modbus slave communication interface 70 to which the Modbus protocol connection line 72 is connected.

The converter device 50 further comprises a conversion module 60 configured to convert M-Bus protocol slave data received from the M-Bus slave devices 10, 20, 30 via the M-Bus master communication interfaces 45, 46, 47 to Modbus protocol slave data to be communicated via the Modbus slave communication interface 70 to the Modbus master device 80.

The conversion module 60 comprises a processor, a memory and conversion instructions stored to the memory. The conversion instructions comprise instructions to carry out the conversion of the M-Bus protocol slave data into Modbus protocol slave data. In some embodiments, the conversion module 60 also comprises a separate storage unit or a separate memory unit.

The conversion module 60 is arranged between the M-Bus master communication interface 40 and the Modbus slave communication interface 70.

The M-Bus master communication interfaces 45, 46, 47 are separately connected to the conversion module 60 with M-Bus conversion lines 55, 56, 57, respectively. The Modbus slave communication interface 70 is connected to the conversion module 60 with a Modbus conversion line 54.

In some embodiments, the Modbus communication protocol is a serial Modbus RTU communication protocol. Thus, the Modbus slave communication interface 70 is a serial Modbus RTU slave communication interface 70, and the conversion module 60 is configured to convert M-Bus protocol slave data from the two or more M-Bus master communication interfaces 45, 46, 47 into serial Modbus RTU protocol slave data. The Modbus master device 80 is further configured to utilize and operate with the serial Modbus RTU communication protocol.

In some other embodiments, the Modbus communication protocol is a Modbus TCP communication protocol. The Modbus slave communication interface 70 is a Modbus TCP slave communication interface 70, and the conversion module 60 is configured to convert M-Bus protocol slave data from the two or more M-Bus master communication interfaces 45, 46, 47 into Modbus TCP protocol slave data. The Modbus master device 80 is further configured to utilize and operate with the Modbus TCP communication protocol.

In some further embodiments, the Modbus communication protocol is Modbus ASCII communication protocol. The Modbus slave communication interface 70 is a Modbus ASCII slave communication interface 70, and the conversion module 60 configured to convert M-Bus protocol slave data from the two or more M-Bus master communication interfaces 45, 46, 47 into Modbus ASCII protocol slave data to the Modbus ASCII slave communication interface 70. The Modbus master device 80 is further configured to utilize and operate with the Modbus ASCII communication protocol.

The converter device 50 is also provided with a converter device address 65 identifying the converter device 50 and enabling the output master device 80 to call the specific converter device 50 by utilizing the converter device address 65. The converter device address 65 is a slave Modbus address 65.

In some embodiments, the Modbus slave communication interface 70 is further provided with an associated Modbus slave interface identifier 71. The Modbus slave interface identifier 71 is configured to identify the Modbus slave communication interface 70.

The supervisory computer 90 is configured to identify and call the converter device 50 with the Modbus slave interface identifier 71. Alternatively, or additionally, the supervisory computer 90 is configured to identify and call the converter device 50 with the slave Modbus address 65.

Each of the M-Bus master communication interfaces 45, 46, 47 is provided with an associated unique M-Bus master interfaces identifier 14', 24', 34'. The unique M-Bus master interfaces identifiers 14', 24', 34' identify the M-Bus master communication interfaces 45, 46, 47. The unique M-Bus master interfaces identifiers 14', 24', 34' further separate the M-Bus master communication interfaces 45, 46, 47 from each other.

The supervisory computer 90 and/or the converter module 50 is configured to call the M-Bus slave devices 10, 20, 30 based on or by utilizing the unique M-Bus master interfaces identifiers 14', 24', 34' of the M-Bus master communication interfaces 45, 46, 47.

The conversion module 60 is configured to comprise a Modbus register.

In some embodiments, the conversion module 60 comprises two or more Modbus registers and each of the two or more M-Bus master communication interfaces 45, 46, 47 is linked to one of the two or more Modbus registers, respectively.

The Modbus register or registers are stored to the memory of the conversion module 60. In a preferred embodiment, the Modbus register(s) are Modbus holding register which may be both read and written. Thus, data may be stored and read from the Modbus registers.

In the measurement system of the present invention, the supervisory computer 90 and/or Modbus master device 80, and/or the converter device 50, is configured to call or send a request to one specific of the M-Bus slave devices 10, 20, 30 by utilizing a broadcast call or a broadcast query and the unique M-Bus master interface identifier 14', 24', 34' of the M-Bus master communication interface 45, 46, 47 to which the M-Bus slave device 10, 20, 30 is connected.

In an alternative embodiment of the present invention, the supervisory computer 90 and/or Modbus master device 80, and/or the converter device 50, is configured to call or send a request to all of the M-Bus slave devices 10, 20, 30 by utilizing a broadcast call or a broadcast query and the unique M-Bus master interface identifiers 14', 24', 34' of the M-Bus master communication interfaces 45, 46, 47 to which the M-Bus slave devices 10, 20, 30 are connected. Alternatively, the utilizing the unique M-Bus master interface identifiers 14', 24', 34' of the M-Bus master communication interfaces 45, 46, 47 is omitted, and the broadcast call or the broadcast query is simply utilized to call or query all the M-Bus slave devices at once.

As a response to the broadcast call or the broadcast query, the M-Bus slave devise are configured to send or transmit M-Bus protocol measurement data to the converter device 50 via the M-Bus master communication interfaces 45, 46, 47.

The conversion module 60 is configured to convert the received M-Bus protocol measurement data into Modbus protocol measurement data and store the Modbus protocol measurement data to the Modbus register(s) in the conversion module 60.

The Modbus protocol measurement data stored to the Modbus register is associated with the or linked with the unique M-Bus master interface identifier 14', 24', 34' corresponding the M-Bus master communication interface 45, 46, 47 via which it was received.

In alternative embodiments, the conversion module 60 is configured to the conversion module 60 is configured to comprise two or more Modbus registers and each of the two or more M-Bus master communication interfaces 45, 46, 47 is linked to one of the two or more Modbus registers, respectively.

In some embodiments, the two or more M-Bus master communication interfaces 45, 46, 47 is linked to one of the two or more Modbus registers, respectively, by utilizing the unique M-Bus master interface identifiers 14', 24', 34'.

The Modbus master device 80 is configured to read the Modbus registers in the conversion module 60 and transmit the Modbus measurement data to the supervisory computer 90.

In the embodiment of figure 3, the Modbus master device 80 is configured to transmit the Modbus measurement data from the Modbus master device 80 with the computer communication connection line 82 to the supervisory computer 90. The computer communication connection line 82 may be a Modbus protocol communication line 82, such as Modbus RTU, Modbus TCP or Modbus ASCII communication line

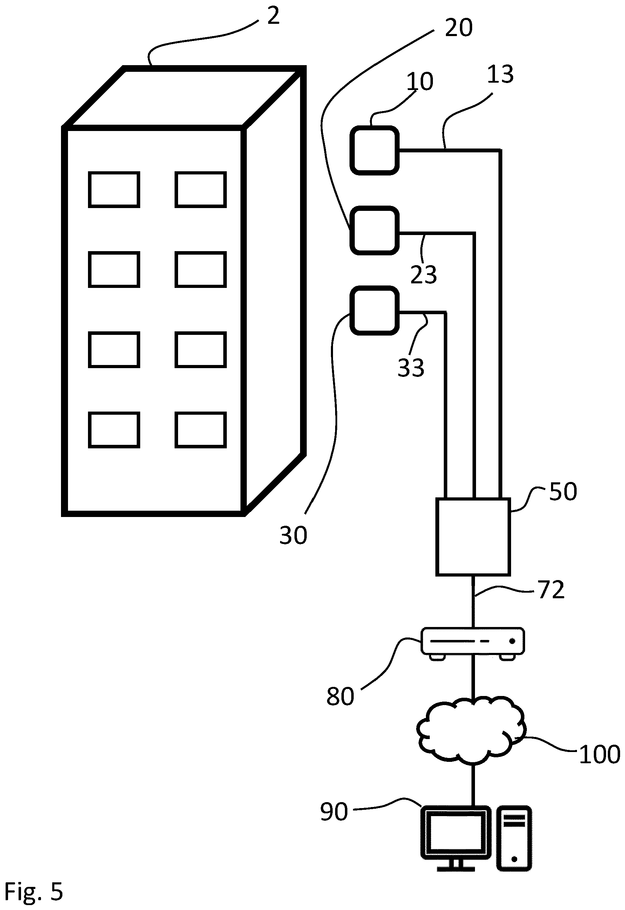

Figure 5 shows an alternative embodiment in which the Modbus master device 80 comprises wireless communication module arranged to send and receive data over a wireless network 100. The wireless communication module is configured to connect to the wireless network 100 and communicate over the wireless network 100 with the supervisory computer 90.

The wireless communication module is configured to utilize Modbus RTU, Modbus TCP and/or Modbus ASCII protocol in communication over the wireless network 100 with the supervisory computer 90.

The wireless network 100 may be any known network such as Wifi network, 3G, 4G, 5G or beyond network, or a radio frequency network or a local area network or the like.

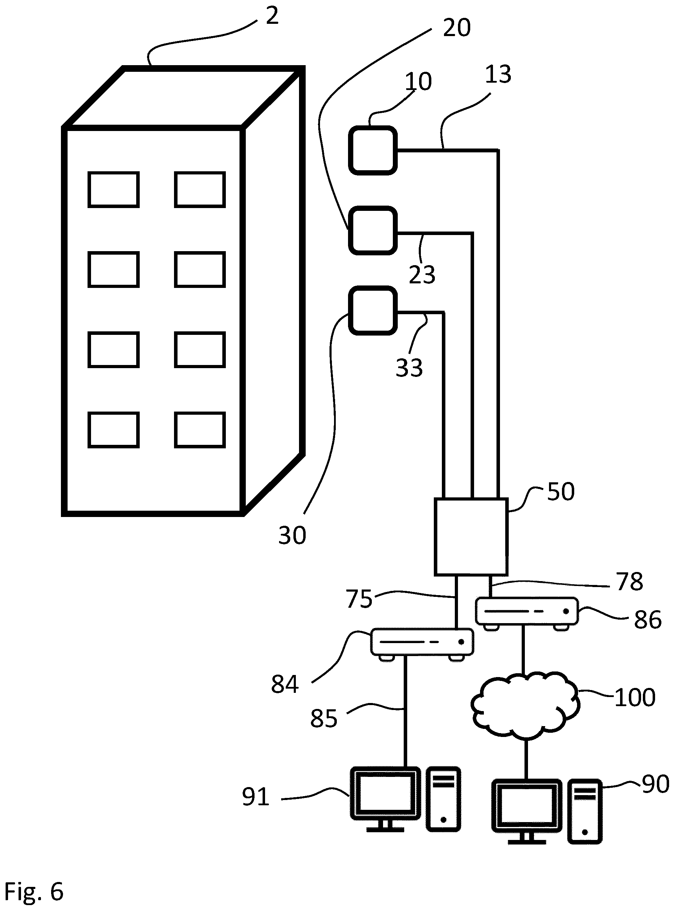

Figure 6 shows a further embodiment of the present invention and the converter device 50 thereof.

The converter device comprises a first Modbus slave communication interface 73 and a second Modbus slave communication interface 76. The first Modbus slave communication interface 73 and the second Modbus slave communication interface 76 are connected to the conversion module 60.

The first and second Modbus slave communication interfaces 73, 76 are preferably different Modus slave communication interfaces 73, 76.

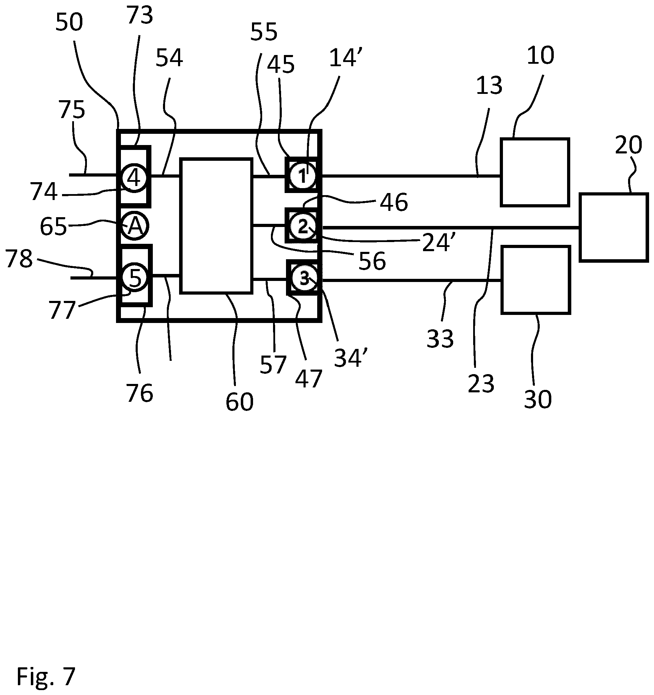

In one embodiment, the first output slave communication interface 73 is a serial Modbus RTU slave communication interface 73. The conversion module 60 is configured to convert M-Bus protocol measurement data from M-Bus master communication interfaces 45, 46, 47 into serial Modbus RTU protocol measurement data for the first Modbus RTU slave communication interface 73. The second output slave communication interface 76 is a Modbus TCP slave communication interface 76. The conversion module 60 is configured to convert M-Bus protocol measurement data from the two or more M-Bus master communication interfaces 45, 46, 47 into Modbus TCP protocol measurement data. Accordingly, a first Modbus master device 84 connected to the first serial Modbus RTU slave communication interface 73 is a serial Modbus RTU master device 84, as shown in figure 7. A second Modbus master device 86 connected to the second Modbus TCP slave communication interface 76 is a serial Modbus TCP master device 84, as shown in figure 7.

In another embodiment, the first output slave communication interface 73 is a serial Modbus RTU slave communication interface 73. The conversion module 60 is configured to convert M-Bus protocol measurement data from M-Bus master communication interfaces 45, 46, 47 into serial Modbus RTU protocol measurement data for the first Modbus RTU slave communication interface 73. The second output slave communication interface 76 is a Modbus ASCII slave communication interface 76. The conversion module 60 is configured to convert M-Bus protocol measurement data from the two or more M-Bus master communication interfaces 45, 46, 47 into Modbus ASCII protocol measurement data. Accordingly, a first Modbus master device 84 connected to the first serial Modbus RTU slave communication interface 73 is a serial Modbus RTU master device 84, as shown in figure 7. A second Modbus master device 86 connected to the second Modbus ASCII slave communication interface 76 is a serial Modbus TCP master device 84, as shown in figure 7.

In a further embodiment, the first output slave communication interface 73 is a Modbus TCP slave communication interface 73. The conversion module 60 is configured to convert M-Bus protocol measurement data from M-Bus master communication interfaces 45, 46, 47 into Modbus TCP protocol measurement data for the first Modbus TCP slave communication interface 73. The second output slave communication interface 76 is a Modbus ASCII slave communication interface 76. The conversion module 60 is configured to convert M-Bus protocol measurement data from the two or more M-Bus master communication interfaces 45, 46, 47 into Modbus ASCII protocol measurement data. Accordingly, a first Modbus master device 84 connected to the first Modbus TCP slave communication interface 73 is a Modbus TCP master device 84, as shown in figure 7. A second Modbus master device 86 connected to the second Modbus ASCII slave communication interface 76 is a serial Modbus TCP master device 84, as shown in figure 7.

As shown in figure 7, the first Modbus master device 84 is connected to a first supervisory computer 91 and the second Modbus master device 86 is connected to a second supervisory computer 90. it should be noted, that both the first and the second Modbus master devices 84, 86 may also be connected to same supervisory computer 90, 91.

In the figure 7, the first Modbus master device 84 is connected to the first supervisory computer 90 with a first computer communication connection line 85. The second Modbus master device 86 is connected to the second supervisory computer 91 via the wireless network 100, as disclosed above.

Alternatively, the first Modbus master device 84 may be connected to the first supervisory computer 90 with the wireless network 100, and the second Modbus master device 86 may be connected to the second supervisory computer 91 with a second computer communication connection line.

Further, in some embodiments both the first and second Modbus master devices 84, 86 may be connected to the first and second supervisory computers 90, 91 or to a same supervisory computer with separate computer communication connection lines or via the wireless network 100.

The invention has been described above with reference to the examples shown in the figures. However, the invention is in no way restricted to the above examples but may vary within the scope of the claims.

## Claims

1. A converter device (50) configured to convert M-bus communication protocol to an output communication protocol, **characterized in that** the converter device (50) comprises:
- two or more M-Bus master communication interfaces (45, 46, 47) for connecting two or more M-Bus slave devices (10, 20, 30) to the converter device (50) and for inputting M-Bus protocol slave data from the two or more M-Bus slave devices (10, 20, 30),
- a conversion module (60) configured to convert M-Bus protocol slave data from the two or more M-Bus master communication interfaces (45, 46, 47) into output protocol slave data,
- each of the two or more M-Bus master communication interfaces (45, 46, 47) is separately connected to the conversion module (60), and
- an output slave communication interface (70, 73, 76) for connecting an output master device (80, 84, 86) to the converter device (50) and for outputting the output protocol slave data from the converter device (50).).

2. A converter device (50) according to claim 1, **characterized in that** each of the two or more M-Bus master communication interfaces (45, 46, 47) is provided with an associated unique M-Bus master interfaces identifier (14', 24', 34').

3. A converter device (50) according to claim 1 or 2, **characterized in that** the converter device (50) comprises:
- one output slave communication interface (70) connected to the conversion module (60); or
- a first output slave communication interface (73) and a second output slave communication interface (76), the first output slave communication interface (73) and the second output slave communication interface (76) being connected to the conversion module (60).

4. A converter device (50) according to any one of claims 1 to 3, **characterized in that**:
- the output slave communication interface (70) is provided with an associated output slave interface identifier (71, 74, 77); or
- the first output slave communication interface (73) is provided with an associated first output slave interface identifier (74), and the second output slave communication interface (76) is provided with an associated second output slave interface identifier (77).

5. A converter device (50) according to any one of claims 1 to 4, **characterized in that**:
- the output communication protocol is Modbus communication protocol,
- the output slave communication interface (70) is a Modbus slave communication interface (70), and
- the conversion module (60) configured to convert M-Bus protocol slave data from the two or more M-Bus master communication interfaces (45, 46, 47) into Modbus protocol slave data.

6. A converter device (50) according to claim 5, **characterized in that**:
- the output communication protocol is a serial Modbus RTU communication protocol, the output slave communication interface (70) is a serial Modbus RTU slave communication interface (70), and the conversion module (60) is configured to convert M-Bus protocol slave data from the two or more M-Bus master communication interfaces (45, 46, 47) into serial Modbus RTU protocol slave data; or
- the output communication protocol is a Modbus TCP communication protocol, the output slave communication interface (70) is a Modbus TCP slave communication interface (70), and the conversion module (60) is configured to convert M-Bus protocol slave data from the two or more M-Bus master communication interfaces (45, 46, 47) into Modbus TCP protocol slave data; or
- the output communication protocol is Modbus ASCII communication protocol, the output slave communication interface (70) is a Modbus ASCII slave communication interface (70), and the conversion module (60) configured to convert M-Bus protocol slave data from the two or more M-Bus master communication interfaces (45,46,47) into Modbus ASCII protocol slave data to the Modbus ASCII slave communication interface (70).

7. A converter device (50) according to claim 5, **characterized in that**:
- the first output slave communication interface (73) is a serial Modbus RTU slave communication interface (73), the conversion module (60) is configured to convert M-Bus protocol slave data from the two or more M-Bus master communication interfaces (45, 46, 47) into serial Modbus RTU protocol slave data for the first output slave communication interface (73), and
- the second output slave communication interface (76) is a Modbus TCP slave communication interface (76), the conversion module (60) is configured to convert M-Bus protocol slave data from the two or more M-Bus master communication interfaces (45, 46, 47) into Modbus TCP protocol slave data for the second output slave communication interface (73); or
- the first output slave communication interface (73) is a serial Modbus RTU slave communication interface (73), the conversion module (60) is configured to convert M-Bus protocol slave data from the two or more M-Bus master communication interfaces (45, 46, 47) into serial Modbus RTU protocol slave data for the first output slave communication interface (73), and
- the second output slave communication interface (76) is a Modbus ASCII slave communication interface (76), the conversion module (60) is configured to convert M-Bus protocol slave data from the two or more M-Bus master communication interfaces (45, 46, 47) into Modbus ASCII protocol slave data for the second output slave communication interface (73); or
- the first output slave communication interface (73) is a Modbus ASCII slave communication interface (73), the conversion module (60) is configured to convert M-Bus protocol slave data from the two or more M-Bus master communication interfaces (45, 46, 47) into Modbus ASCII protocol slave data for the first output slave communication interface (73), and
- the second output slave communication interface (76) is a Modbus TCP slave communication interface (76), the conversion module (60) is configured to convert M-Bus protocol slave data from the two or more M-Bus master communication interfaces (45, 46, 47) into Modbus TCP protocol slave data for the second output slave communication interface (73).

8. A converter device (50) according to any one of claims 1 to 7, **characterized in that**:
- the conversion module (60) is configured to comprise two or more output registers and each of the two or more M-Bus master communication interfaces (45, 46, 47) is linked to one of the two or more output registers, respectively; or
- the output communication protocol is Modbus communication protocol, and the output slave communication interface (70) is the Modbus slave communication interface (70), and
- the conversion module (60) is configured to comprise two or more Modbus registers and each of the two or more M-Bus master communication interfaces (45, 46, 47) is linked to one of the two or more Modbus registers, respectively.

9. A converter device (50) according to any one of claims 1 to 8, **characterized in that**:
- the converter device (50) is provided with a converter address (65); or
- the output communication protocol is Modbus communication protocol, the output slave communication interface (70, 73, 76) is a Modbus slave communication interface (70, 73, 76), and the converter device (50) is provided with a slave Modbus address (65).

10. A measurement system comprising:
- a converter device (50) configured to convert M-bus communication protocol data to an output communication protocol data,
- two or more M-Bus slave devices (10, 20, 30) connected to the converter device (50), the two or more M-Bus slave devices (10, 20, 30) being configured to generate measurement data and transmit the generated measurement data as M-Bus protocol measurement data, and
- the converter device (50) comprises a conversion module (60) configured to convert M-Bus protocol measurement data to the output communication protocol data,
**characterized in that**
- the converter device (50) comprises two or more M-Bus master communication interfaces (45, 46, 47) for receiving the M-Bus protocol measurement data,
- each of the two or more M-Bus master communication interfaces (45, 46, 47) is separately connected to the conversion module (60), and
- each of the two or more M-Bus slave devices (10, 20, 30) is connected to a separate M-Bus master communication interface (45, 46, 47) of the converter device (50).

11. A measurement system according to claim 10, **characterized in that**:
- the converter device (5) comprises an output slave communication interface (70, 73, 76), and
- the converter device (50) comprises a conversion module (60) configured to convert the M-Bus protocol measurement data from the two or more M-Bus master communication interfaces (45, 46, 47) into output protocol measurement data; or
- the converter device (5) comprises an output slave communication interface (70, 73, 76), the output slave communication interface (70, 73, 76) being a Modbus slave communication interface (70, 73, 76), and
- the converter device (50) comprises a conversion module (60) configured to convert M-Bus protocol measurement data from the two or more M-Bus master communication interfaces (45, 46, 47) into Modbus protocol measurement data.

12. A measurement system according to claim 11, **characterized in that**:
- the measurement system comprises an output master device (80, 84, 86) connected to the output slave communication interface (70, 73, 76); or
- the measurement system comprises an output master device (80, 84, 86) connected to the Modbus slave communication interface (70, 73, 76), the output master device (80, 84, 86) being a Modbus master device (80, 84, 86).

13. A measurement system according to claim 12, **characterized in that**:
- the conversion module (60) is configured to comprise two or more output registers and each of the two or more M-Bus master communication interfaces (45, 46, 47) is linked to one of the two or more output registers, respectively,
- the conversion module (60) is configured to store the M-Bus protocol measurement data of the two or more M-Bus slave devices (10, 20, 30) to the two or more output registers as the output communication protocol measurement data, and
- the output master device (80, 84, 86) is configured to read the stored output communication protocol measurement data from the two or more output registers; or
- the conversion module (60) is configured to comprise two or more Modbus registers and each of the two or more M-Bus master communication interfaces (45, 46, 47) is linked to one of the two or more Modbus registers, respectively,
- the conversion module (60) is configured to store M-Bus protocol measurement data of the two or more M-Bus slave devices (10, 20, 30) to the two or more Modbus registers as Modbus protocol measurement data, and
- the Modbus master device (80, 84, 86) is configured to read the stored Modbus protocol measurement data from the two or more Modbus registers.

14. A measurement system according to claim 12, **characterized in that**:
- the converter device (50) comprises a first output slave communication interface (73) and a second output slave communication interface (76),
- the measurement system comprises a first output master device (84) connected to the first output slave communication interface (73) and a second output master device (86) connected to the second output slave communication interface (76), and that:
- the first output slave communication interface (73) is a serial Modbus RTU slave communication interface (73) and the first output master device (84) is a serial Modbus RTU master device (84), and
- the second output slave communication interface (76) is a Modbus TCP slave communication interface (76) and the second output master device (86) is a Modbus TCP master device (86); or
- the first output slave communication interface (73) is a serial Modbus RTU slave communication interface (73) and the first output master device (84) is a serial Modbus RTU master device (84), and
- the second output slave communication interface (76) is a Modbus ASCII slave communication interface (76) and the second output master device (86) is a Modbus ASCII master device (86); or
- the first output slave communication interface (73) is a serial Modbus ASCII slave communication interface (73) and the first output master device (84) is a serial Modbus ASCII master device (84), and
- the second output slave communication interface (76) is a Modbus TCP slave communication interface (76) and the second output master device (86) is a Modbus TCP master device (86).

15. A measurement system according to any one of claims 10 to 14, **characterized in that** the converter device (50) is a converter device according to any one of claim 1 to 9.
